# EUROPEAN PATENT APPLICATION

(11) **EP 2 123 166 A1**
(43) Date of publication of application: **25.11.2009**
(21) Application number: 08156287.8
(22) Date of filing: 15.05.2008
(51) Int. Cl.: A23D 7/00, A23L 1/03, A23L 1/035, A23L 1/30, A23L 1/22

(54) **Edible emulsions with citric acid ester**

(71) Applicant: Unilever N.V., 3013 AL Rotterdam (NL)
(72) Inventor: The designation of the inventor has not yet been filed
(74) Representative: Cromsigt, Jenny

(57) **Abstract**

Edible emulsion comprising a tasty ingredient with an undesired flavour, 0.25 to 2 wt% citric acid ester and 15 to 85 wt% fat, wherein the tasty ingredient is present in an amount that gives the undesired flavour in the emulsion without the citric acid ester.

## Description

### Field of the invention

The invention relates to an edible emulsion comprising a tasty ingredient and citric acid ester.

### Background to the invention

Edible emulsions are used in a variety of ways, e.g. spreadable products, frying products, baking ingredients, drinks, diary type products. They are therefore suitable vehicles for incorporation of healthy ingredients, such as blood-cholesterol lowering ingredients e.g. like sterols, blood-pressure lowering ingredients, e.g. like peptides, long-chain poly unsaturated fatty acids (LC-PUFA) from fish-oil, poly phenols, anti-oxidants and many more.

Unfortunately for a number of these healthy ingredients the taste is not appreciated, as they taste bitter or have a rancid taste. In addition, some of the healthy ingredient may by themselves have a good taste but the combination of the healthy ingredient with the food stuff it is incorporated in is not appreciated, as the taste of the healthy ingredient does not combine very well with the taste of the food product, e.g. a sweet taste in a savoury product, or it has a strong taste that overshadows the taste of the food product.

Often tasty ingredients are encapsulated to prevent the contact of the ingredient with the mouth. A drawback of the encapsulation is that a suitable encapsulate should be found that works well in the food product. Furthermore encapsulates are often more expensive than the bare ingredient it self. In addition, if the tasty ingredient has a functional effect on the food product, this effect is often lost when the ingredient is encapsulated.

Another way of masking a taste is to add another taste that overtakes the taste of the healthy ingredient. However often a lot of the masking taste should be added to mask the undesired taste and not much flexibility in taste is left, and another strong taste is left, which leaves out neutral tasting food products.

Citric acid esters of monoglycerides and diglycerides are emulsifiers produced from esterification of glycerol with citric acid and edible fatty acids or by reaction of a mixture of mono- and diglycerides with citric acid. The resulting mixture of various molecular species is referred to as citric acid esters or citrem. Other names that may be used are citric acid esters of mono-and diglycerides of edible fatty acids, mono- and diglycerides of fatty acids esterified with citric acid, monoglycerol citric acid ester, monoglycerol citrates, citric acid monoglycerides, citric acid esters of glycerides, citric acid fatty acid esters of glycerides, citric and fatty acid esters of glycerol, citroglycerides. The citric acid esters are used as anti-spatter agents in margarine, fat separation reducers in meat emulsions and also in chocolate confectionery.

WO03/055324 discloses protein hydrolysates and plant sterol containing compositions for improving serum lipid profile and preventing atherosclerosis. The compositions may optionally comprise also emulsifiers, wherein the emulsifier is used to complex with the protein hydrolysates. Citric acid esters are mentioned in a long list of many other emulsifiers. A specific protein hydrolysate citric acid ester complex is disclosed in the examples with which a low-fat yoghurt is made.

It is therefore an object of the current invention to provide a food product which comprises a tasty ingredient. In addition, it is an object of the present invention to provide a food product which comprises a healthy ingredient with an undesired taste wherein the undesired taste of the ingredient is not noticed by consumers. Furthermore an object of the invention is to provide a food product with a tasty ingredient wherein the undesired taste is not noticed by consumers but still has the same functionality as the food product with the health ingredient if the taste has not been masked. Another object of the invention is to provide a food product which is stable under storage at ambient and higher temperatures. Further food products with good organoleptic properties are envisioned with the current invention.

### Summary of the invention

One or more of the above objects are attained by an edible emulsion comprising a tasty ingredient with an undesired flavour, 0.25 - 2 wt% citric acid ester and 15 to 85 wt% fat, wherein the tasty ingredient is present in an amount that gives the undesired flavour in the emulsion without the citric acid ester.

It was surprisingly found that emulsions with a tasty ingredient do not have the flavour of the tasty ingredient itself if citric acid ester is used in the emulsion.

### Detailed description of the invention

The present invention relates to a tasty ingredient with an undesired flavour. Flavour is the sensory impression of a food or other substance, and is determined mainly by the chemical senses of taste and smell. It may be ingredients that have a bitter taste, rancid taste, off-flavour taste, metallic taste, or old taste, offensive taste. It may also be ingredients that have a very pronounced taste or flavour which is undesired for the specific type of food product. Examples are salt flavour for sweet products, or sweet flavour for savoury type products, coffee flavoured ingredients for spreads to be used as margarine. The flavour of the tasty ingredient may be determined by a sensory panel.

The taste or flavour of an ingredient is dependent on the concentration of the ingredient. Therefore the present invention relates to an emulsion with a tasty material in an amount that gives the undesired flavour in the emulsion without citric acid ester. The tasty material is tested by a sensory panel that evaluates the tasty material in an emulsion with and without citric acid ester. Tasty materials that show a different in taste or flavour between emulsions with and without citric acid ester are envisioned by the present invention.

Sensory panels consist of trained human assessors that qualify and quantify sensory properties of foods. The responses made by the sensory panels are recorded and may be analysed by statistical methods e.g. ANOVA, multivariate or univariate data analyses. Within food research, sensory panels are commonly used to qualify and quantify sensory properties, such as taste, odour or smell, flavour, mouthfeel, and other organoleptic properties. The type of sensory panel will depend on the taste of the tasty ingredient and the product format, however these consideration are all within the skills of a skilled person.

Preferably the edible emulsion of the present invention has a good melting behaviour. Melting behaviour influences the organoleptic properties of an emulsion. If the emulsion doesn't melt fast enough a waxy mouthfeel becomes present and this is not appreciated by consumers.

In addition, suitably the edible emulsion of the present invention has overall a good taste impression, suitable for the product, despite the presence of a tasty ingredient with an undesired flavour. The emulsion preferably has a good melting behaviour in the mouth and a creamy and/or dairy taste is appreciated.

For the present invention healthy ingredients are ingredients that provide a health benefit to a food. Many healthy ingredients have an undesired flavour. The present invention is therefore especially suited for tasty ingredients that are also healthy ingredients. Examples are potassium salts and peptides that have a blood pressure lowering effect. It is known that potassium salt in the amount needed to obtain a health benefit gives a strong bitter taste to a food product. Many healthy ingredients need a certain doses in order to give a health benefit, the so-called effective amount. Often these effective amounts are high thereby increasing the undesired taste to the food product they are in. The present invention is specifically suited for healthy ingredients in effective amounts.

Preferably the effective amount of the healthy ingredient is such that it would give a health benefit in a daily serving size of the food product. The daily serving size is the amount of a food product typically eaten in a day. The daily serving size need not to be taken in 1 go, i.e. it may be divided up in several portions a day. Different food products have different daily serving sizes. Margarine for example has a daily serving size of about 10 to 30 g per day, which may be divided up in 4 portions, together giving the daily serving size.

In a suitable embodiment of the present invention, the healthy ingredient provides a health effect. Preferably the health effect is selected from the group comprising reduction of risk for cardiovascular disease, reduction of blood pressure, reduction of blood cholesterol, increased resistance to disease, improved immune response, improved brain function, weight loss, weight control, reduction of Body Mass Index (BMI), improved blood flow, lowering plasma triglycerides, anti-inflammatory effect, antirheumatic effect, smooth platelets, inhibition of platelet aggregation, antithrombotic effect and healthy growth for children.

Preferably the tasty ingredient is selected from the group comprising peptides, hydrolysed proteins, potassium salt, mineral salts, aqueous fruit extracts, protein and fat free tomato extracts, polyphenols, such as flavonoids and flavanols, soy ingredients, green tea extracts, grape seed extracts, hawthorne, catechins, and strong anti-oxidants. It should be noted that e.g. proteins that are not hydrolysed have a very pleasant taste, in contrast to hydrolysed proteins and peptides that have a very bitter taste. Also tomatoes and fruit by themselves and their purees may have a nice taste which is appreciated by consumers. In contrast aqueous extracts from fruit and tomato being substantially free of insoluble matter such as fruitflow do not have a pleasant taste, especially in an effective amount. The present invention is therefore especially suited for tasty ingredients with an undesired flavour. The undesired flavour may be selected from the group of bitterness, rancid, old, metal, cardboard, oxidized, musty, dusty and astringent. Whereas positive flavours are preferably retained. Positive flavours may be selected from dairy, buttermilk, sweet, candy, caramel, cream. Whether a flavour is perceived as positive or undesired may depend on the product format.

The invention is especially suited for bitter tasting compounds. Suitably the healthy ingredient is water soluble.

The amount of healthy ingredient depends on the effective amount and on the daily serving size of the edible emulsion and can be determined by the skilled person. Preferably, the amount is 50 to 500 % of the recommended daily intake (RDI) of the healthy ingredient per daily serving size, more preferably 100 to 250 %, most preferably 100 to 150 % of the RDI. Preferably the daily serving size is divided into 2 to 4 portions a day.

The present invention is especially suitable for non-encapsulated tasty ingredients. The use of citric acid ester in the edible emulsion of the present invention circumvents the need for encapsulation of tasty ingredients with an undesired flavour. A preferred embodiment of the present invention provides for an edible emulsion with a tasty ingredient with an undesired flavour that is not encapsulated.

The present invention is also very suitable for edible emulsions with more than 1 tasty ingredient. Even though a taste or flavour of an ingredient might be acceptable to a food product, the addition of another tasting ingredient might give a combination of flavours that is not desired, e.g. a chocolate flavour with an onion flavour. Because the edible emulsion with citric acid ester somehow masks the taste of the tasty ingredient, 2 or more tasty ingredients with different taste would still give a food product with an acceptable taste when applying the present invention. A preferred embodiment of the present invention provides for an edible emulsion with more than 1 tasty ingredient. Even more preferred the present invention provides for an edible emulsion with more than 1 tasty ingredient wherein at least 1 tasty ingredient gives a health benefit.

Another suitable embodiment of the present invention is an emulsion with a neutral taste. The present invention avoids the need of the addition of another flavour to mask the taste, thereby providing an ability to have neutral tasting products. The neutral taste of a food product may be assessed by a sensory panel.

Products according to the invention comprise citric acid ester. These citric acid esters are esters from mono- and/or diglycerides which is commercially available amongst others under the name Citrem ex Danisco and CMG-K30 / K37 ex Riken Vitamin. This ingredient is generally known to be an excellent emulsion stabiliser.

Preferred citric acid esters are mono- and/or diglycerides with unsaturated fatty acids. Suitably the iodine value (IV) of the citric acid esters are at least 40, more preferably at least 80. Very suitably ranges of citric acid esters are citric acid esters with IV of 60 to 150, more preferably 80 to 120.

Also preferred citric acid esters are mono- and/or diglycerides with saturated fatty acids. Suitably the iodine value (IV) of the citric acid esters are less than 40, more preferably less than 5.

Preferably the fatty acids of the citric acid esters have a chainlength of 14 to 22 carbon atoms, more preferably 16-18.

The amount of citric acid ester in the products of the invention is from 0.25 to 2% wt% on total product weight. Preferably the amount of citric acid ester in food products according to the invention is from 0.3 to 1.2 wt%, more preferably 0.5 to 0.8 wt%.

The emulsion of the invention may comprise thickeners. For stability reasons it may be useful to include thickeners in the emulsion, for example very low spreads, with 20 to 30 wt% of fat, often improve by addition of thickeners. Whether or not a thickener should be added and in what amount depends on factors as stability and application and may be determined by the skilled person.

Thickener may be any known thickener and are preferably selected from the group comprising gums, like xanthan, guar, and locust bean, carrageenan, polysaccharides, alginate, pectin, starch, modified starch and gelatine.

In preferred food products according to the invention, the aqueous phase comprises a native or a modified fully gelatinised starch which may be cook-up or pre-gelled, selected from any of the main starch groups: wheat, potato, rice, maize, waxy rice or waxy maize.

Examples of suitable starches include Remyrice^{™}, Resistamyl^{™}, Merigel^{™}, and PurityTM.

The amount of starch in the food product according to the invention depends somewhat on the type of chosen starch and is preferably from 0.2 to 5 wt%, more preferred from 0.7 to 3 wt%, most preferred from 1 to 2 wt%.

In a preferred embodiment the emulsion is fat continuous. In another preferred embodiment the emulsion is not a duplex emulsion. Even more preferred the emulsion is a single emulsion. A preferred embodiment of the present invention is a spread. Preferably the emulsion of the present invention is not chocolate or a chocolate containing emulsion.

The emulsion according to the invention comprises from 15 to 85 wt% of a fat, preferably from 20 to 70 wt% more preferably from 25 to 60 wt%, most preferably from 30 to 40 wt% fat. The fat consists predominantly of triglycerides. The fat can be a single fat or a combination of fats.

The fat or fat blend may comprise vegetable or animal fats which may be hydrogenated, interesterified or fractionated and combinations thereof. Suitable animal fats may consist of butterfat or tallow. Suitable vegetable fats can for example be selected from the group comprising bean oil, sunflower oil, palm kernel oil, coconut oil, palm oil, rapeseed oil, cotton seed oil, maize oil, or their fractions, or a combination thereof. Interesterified fat blends of these fats or optionally with other fats are also encompassed in the invention.

Advantageously, long chain poly unsaturated fatty acids (LC-PUFA), e.g. omega-3 and omega-6 fatty acids are incorporated in the edible emulsion of the present invention. Suitably these LC-PUFAs come from sources like fish oil and/or algae oil.

To ensure homogeneous distribution of the aqueous phase in the continuous fat phase, the droplet size distribution D_{3,3} of the dispersed aqueous phase is preferably less than 8 µm, more preferably from 4 to 8 µm, more preferred even lower than 4 µm. The method to determine D_{3,3} is illustrated in the examples.
It will be appreciated that the droplet size can be controlled by adjusting the processing conditions in the unit operations:
e.g. higher rotational speed in a scraped surface heat exchanger will produce correspondingly smaller water droplet size distributions.

In addition to the citric acid ester the food product according to the invention may comprise another emulsifier, the co-emulsifier. This co- emulsifier is preferably a water-in-oil emulsifier. More preferably this co-emulsifier is selected from the group comprising distilled monoglycerides, di-acetyl acetic acid esters of monoglycerides, lactic acid esters of monoglyceride, mono-diglycerides, polyglycerol esters of fatty acids or sorbitan esters of fatty acids.

The most preferred co-emulsifier is a distilled monoglyceride. Even more preferred are monoglycerides with unsaturated fatty acids or combinations of a monoglyceride comprising a saturated fatty acid residue and a monoglyceride comprising an unsaturated fatty acid residue.

The amount of co-emulsifier depends on the type and effectiveness of the emulsifier selected and can be determined by the person skilled in the art. Other factors influencing the amount of emulsifier that is required to obtain storage stable products are the amount of fat and the amount of citric acid ester.

As a general guidance the amount of co-emulsifier is preferably from 0.05 to 1.5 wt%, more preferred from 0.1 to 0.7 wt%, most preferred from 0.15 to 0.5 wt%.

The pH of the aqueous phase can be set to the desired value, among others to influence acidic or basic taste impression and to influence microbial stability. Preferably the pH of the aqueous phase in food products according to the invention is from 4.3 to 5.5.

Optionally some protein is added to the product according to the invention. Protein may be added to beneficially influence the taste, flavour and nutritional value of the food product and also may be added to increase browning of food stuff when the current composition is used as a medium for shallow frying. Preferably the protein source is selected from the group comprising milk powders such as skim milk powder, butter milk powder, sodium caseinate, sour whey, denatured whey, or a combination thereof. It should be noted that normal, unhydrolysed dairy protein, is not encompassed in the definition of tasty ingredient with an undesired flavour.

Preferably the citric acid ester has not been complexed with hydrolysed protein.

The emulsion according to the invention optionally contain other ingredients such as preservatives, vitamins, taste and flavour components, colorants such as beta-carotene, anti-oxidants.

The emulsion according to the invention can be prepared by any suitable process to prepare such products. For fat continuous emulsions, a preferred process is a so-called inversion process; a fat phase containing citric acid ester and a waterphase are provided and mixed to obtain a water-continuous pre-mix containing the tasty ingredient with the undesired flavour. The water-continuous premix is later inverted to a fat-continuous emulsion.

In some cases to obtain a health effect, the effective amount of the tasty ingredient is large such that a fat-continuous mix of all the ingredients is too thick and the pressure in the system is too high. It was surprisingly found that first a water-continuous premix could be made that did not have the high pressure issues. Citric acid esters are effective emulsion stabilisers (HLB 6-10) and it was not expected that a water-continuous premix would not have the pressure problems.

Preferably the emulsion is a food product.

### Experimental:

### D3,3 value measurements and E-sigma:

Samples were filled to a height of 15 mm in NMR tubes of 10 mm diameter, and thermally equilibrated for 30 min at 20 °C. A restricted diffusion-based droplet size was obtained by means of pfg-NMR using a Bruker Minispec MQ20. The details of the technique are discussed by Goudappel et al (Journal of Colloid and Interface Science 239, (2001) 535-542). A measurement yields values for the volume weighted geometric mean diameter d_{3,3} and the width of the droplet size distribution when plotted as a function of the logarithm of the diameter σ (E-sigma). Measurements were carried out in triplicate and results are expressed in terms of average d_{3,3} values. Definitions of droplet sizes are given by Alderliesten (Particle and Particle Systems Characterization 7 (1990) 233-241, and ibid 8 (1991) 237-241).

### Example 1-3 and comparative example A,B and C

Ingredients are listed in table 1

**Table 1; ingredients in wt%**

| Ingredient | Ex 1 | Ex 2 | CompA | Comp B | Comp C |
|---|---|---|---|---|---|
| fat | 35 | 35 | 35 | 35 | 35 |
| Citrem 2-in-1 | 0.2 | 0.4 | 0 | 0 | 0 |
| Dimodan HP | 0.2 | 0.2 | 0.2 | 0.2 | 0.2 |
| Beta carotene synthetic | 0.1 | 0.1 | 0.1 | 0.1 | 0.1 |
| flavour | 0.3 | 0.3 | 0.3 | 0.3 | 0.3 |
| Sunlec Z | 0.1 | 0.1 | 0.1 | 0.1 | 0.1 |
| Potassium gluconate | 12.5 | 12.5 | 10 | 5 | 0 |
| Potassium lactate | 0 | 0 | 0 | 4.6 | 0 |
| Potassium sorbate | 0.26 | 0.26 | 0.26 | 0.26 | 0.26 |
| BMP | 0.2 | 0.2 | 0.2 | 0.2 | 0.2 |
| Tapioca starch | 2.75 | 2.75 | 2.75 | 2.75 | 2.75 |
| Water | Up to 100 | Up to 100 | Up to 100 | Up to 100 | Up to 100 |
| pH | 4.7 | 4.7 | 5.0 | 5.0 | 5.0 |
| %K⁺ | 2.0 | 2.0 | 1.6 | 2.2 | <0.1 |
| Taste score | 3 | 2 | 5 | 4 | 1 |
| D3.3 /e-sigma | 3.8/ 2.3 | 3.9 / 2.2 | 5.0 / 2.2 | 5.2 / 2.3 | 5.6 / 2.2 |

### Processing

In a vessel a mixture was prepared of the fat, emulsifier, antioxidant, and colorant at a temperature of about 60 °C. In another, separate vessel a mixture was made of starch and water which was heated to a temperature of 92 °C for 25 minutes. This mixture was cooled to 60 °C and completed with all the other water soluble ingredients, such as salt, protein, etc. and subsequently mixed with the oil phase in a pre-mix tank at 60 °C as a water-continuous emulsion, followed by cooling and shearing in a series of A- and C-units^{tm} where the dimensions and energy requirements are suitable to deliver a fat-continuous end product and achieve a plastic structure which could be easily packed at around 10 °C in a suitable packaging material.

Taste scores were determined by a test panel of 10 persons; scores were given at a scale of 1 - 5.
1 indicates a good tasting score
3 is not acceptable for a consumer ready spread
5 is regarded as very bitter and a fully unacceptable product to offer to consumers

## Claims

1. Edible emulsion comprising a tasty ingredient with an undesired flavour, 0.25 to 2 wt% citric acid ester and 15 to 85 wt% fat, wherein the tasty ingredient is present in an amount that gives the undesired flavour in the emulsion without the citric acid ester.

2. Edible emulsion according to claim 1 wherein the amount of citric acid ester is from 0.3 to 1.2 wt%.

3. Edible emulsion according to claim 1 or 2 wherein the tasty ingredient is a healthy ingredient.

4. Edible emulsion according to claim 3 wherein the healthy ingredient is present in an effective amount.

5. Edible emulsion according to any of claims 1 to 4 wherein the tasty ingredient is selected from the group comprising of peptides, hydrolysed proteins, potassium salt, protein and fat free tomato extracts, and polyphenols.

6. Edible emulsion according to any of claims 1 to 5 wherein the undesired flavour is selected from the group of bitterness, rancid, old, metal, cardboard, oxidized, musty, dusty and astringent.

7. Edible emulsion according to any of claims 1 to 6 wherein the tasty ingredient is water soluble.

8. Edible emulsion according to any of claims 1 or 7 wherein the emulsion is fat continuous having a dispersed aqueous phase.

9. Edible emulsion according to any of claims 1 to 8 wherein the amount of fat is between 20 and 70 wt% and wherein the emulsion is a spread.

10. Edible emulsion according to any of claims 1 to 9 wherein the amount of fat is from 25 to 60 wt%, preferably from 30 to 40 wt%.

11. Edible emulsion according to any of claims 1 to 10
wherein the IV of the citric acid ester is between 60 and 150.

12. Use of 0.25 to 2 wt% citric acid ester in an edible emulsion comprising 15 to 85 wt% fat and a tasty ingredient with an undesired flavour to mask the undesired flavour.

13. Use of citric acid ester in an emulsion according to claim 1 to 11 to mask the undesired flavour of the tasty ingredient.
